# EUROPÄISCHE PATENTSCHRIFT

(11) **EP 1 669 639 B1**
(45) Veröffentlichungstag und Bekanntmachung des Hinweises auf die Patenterteilung: **27.02.2008**
(21) Anmeldenummer: 05024377.3
(22) Anmeldetag: 09.11.2005
(51) Int. Cl.: F16H 25/24

(54) **Gewindetrieb mit federnder Fangmutter**
Threaded drive with spring against safety nut.
Tige filetée avec ressort s'appuyant contre un écrou de sécurité

(30) Priorität: 25.11.2004 DE 102004056881
(43) Veröffentlichungstag der Anmeldung: 14.06.2006
(73) Patentinhaber: Bosch Rexroth Mechatronics GmbH, 97424 Schweinfurt (DE)
(72) Erfinder: Maiß, Harald, Dipl.-Ing. (FH), 97525 Schwebheim (DE)

(56) Entgegenhaltungen:
- DE-A1- 10 348 320
- DE-U1- 20 008 048
- FR-A- 2 830 916
- US-A- 3 857 547

## Beschreibung

Die Erfindung betrifft einen Gewindetrieb mit einer Tragmutter und einer Fangmutter zur Absicherung gegen ein Versagen der Tragmutter gemäß Anspruch 1.

Ein derartiger Gewindetrieb ist beispielsweise aus der nicht vorveröffentlichten DE 103 48 320 bekannt. Dort ist in Fig. 2 ein Gewindetrieb 110 mit einer Achse A bestehend aus einer Tragmutter und einer Fangmutter 116 gezeigt, Die Tragmutter besteht aus einem Hauptkörper 114 und einem Befestigungskörper 118. Die Tragmutter und die Fangmutter stehen mit der Gewindespindel 112 in Schraubeingriff, wobei die Fangmutter ein größeres Gewindespiel aufweist als die Tragmutter. Dadurch wird gewährleistet, dass der Kraftfluss in einem ersten Betriebszustand über die Tragmutter und in einem zweiten Betriebszustand über die Fangmutter erfolgen kann. Die Fahgmutter ist in einer Stellung festlegbar, in der sie an einer Anlagefläche der Tragmutter anliegt. wobei sie die Gewindespindel und insbesondere deren Gewindegänge nicht berührt. Der erste Betriebszustand entspricht dem Normalbetrieb des Gewindetriebs in dem die Tragmutter ordnungsgemäß arbeitet, während im zweiten Betriebszustand eine Beschädigung der Tragmutter aufgetreten ist. Mit der Fangmutter soll dann verhindert werden, dass eine Last, die vom Gewindetrieb entgegen der Schwerkraft angehoben wurde, herabfällt.

Dokument US 3 857 547 wird als nächstliegenden Stand der Technik angesehen.

Aus dem deutschen Gebrauchsmuster DE-GM 19 41 814 ist ein ähnlicher Gewindetrieb bekannt, bei dem die Fangmutter auch während des Betriebs insbesondere im zweiten Betriebszustand frei drehbar zur Tragmutter ist. Hiermit soll gewährleistet werden, dass die Beschädigung der Tragmutter von einem Außenstehenden erkannt werden kann, weil ein Verfahren des Gewindetriebs nicht oder nur noch in einer Richtung möglich ist. Weiter ist auch eine axiale Beweglichkeit der Fangmutter relativ zur Tragmutter vorgesehen. Nachteilig an dieser Ausführungsform ist, dass keine Vorkehrungen getroffen, wurden, damit die Tragmutter die Gewindespindel nicht berührt. Dies ist besonders dann wichtig, wenn als Tragmutter eine Wälzkörperumlaufmutter verwendet wird. In diesem Fala besitzen die Gewindegänge der Gewindespindel eine hohe Oberflächengüte, die durch eine schleifende Fangmutter leicht zerstört werden könnte. Hierdurch würde die Dauerhaltbarkeit des Gewindetriebs beeinträchtigt werden.

Aus der DE 196 25 999 C2 ist ein weiterer Gewindetrieb mit Fangmutter bekannt. Hier ist die Fangmutter über einen dünnen Steg drehfest mit der Tragmutter verbunden. Der Steg wird beim Versagen der Tragm.utter elastisch oder plastisch in Achsrichtung verformt, so dass eine Axialbewegung der Fangmutter relativ zur Tragmutter eintritt. Diese Bewegung wird von einem Sicherheitsschalter erfasst. Nachteilig an dieser Ausführungsform ist, dass die Verbindung zwischen Fangmutter und Tragmutter nur sehr aufwendig hergestellt bzw. montiert werden kann. Die Tragmutter kann hierzu einstückig mit der Fangmutter ausgeführt werden, was bei Verwendung einer gehärteten Wälzkörperumlaufmutter nur schwer zu bewerkstelligen ist. Bei getrennter Ausführung von Tragmutter und Fangmutter ist wiederum eine aufwendige Ausrichtprozedur erforderlich, um sicherzustellen, dass die Fangmutter die Gewindegänge der Gewindespindel nicht berührt.

Es ist Aufgabe der Erfindung, einen Gewindetrieb gemäß Anspruch 1 zu schaffen, bei dem das Versagen der Fangmutter von einem Außenstehen erkannt werden kann. Diese Aufgabe wird dadurch gelöst, dass die Fangmutter von einer Feder gegen die Anlagefläche gedrängt wird. Dadurch wird der Verdrehwiderstand zwischen Fangmutter und Tragmutter herabgesetzt. Bei Versagen der Fangmutter reicht dieser Verdrehwiderstand nicht mehr aus, um die Tragmutter gegen das Reibmoment der angetrieben Gewindespindel festzuhalten, so dass keine Axialbewegung mehr stattfindet. Dieser Umstand wird von einem Außenstehenden reicht erkannt werden.

Der erfindungsgemäße Gewindetrieb ist gegenüber der Ausführungsform gemäß DE 103 48 320 besonders vorteilhaft, wall als einziges zusätzliches Teil eine Feder erforderlicht ist, die kostengünstig am Markt erhältlich ist.

Weiter kann das Ausrichten der Fangmutter noch weiter vereinfacht werden, wenn diese frei verdrehbar relativ zur Tragmutter ist. Durch den begrenzten Verdrehwiderstand kann die Fangmutter zu Ausrichtzwecken, nämlich zum Einstellen des Spaltes zwischen Fangmutter und Gewindespindel, verdreht werden, ohne dass Befestigungsschrauben gelöst und wieder angezogen werden müssten.

Die Fangmutter kann In der ersten Stellung relativ zur Tragmutter mit Reibschluss an der Anlagefläche gegen Verdrehen gesichert sein. Hierdurch wird gewährleistet, dass der Spalt zwischen Gewindespindel und Fangmutter stufenlos einstellbar ist. Über die Gestaltung der Berührflächen z.B. der Oberflächenrauhigkeit und der Oberflächenbeschichtung kann die gewünschte Reibkraft eingestellt werden. Gegebenenfalls kann auch eine Zwischenscheibe aus geeignetem Reibmaterial vorgesehen werden.

Der Verdrehwiderstand kann im ersten Betriebszustand, in der sich die Fangmutter in der ersten Stellung befindet, größer sein als im zweiten Betriebszustand, Im ersten Betriebszustand muss der Verdrehwiderstand so groß sein, dass sich die Fangmutter auch bei Vibrationen nicht relativ zur Tragmutter verdreht. Im zweiten Betriebszustand soll sich die Fangmutter jedoch.. relativ leicht verdrehen lassen.

Es ist vorteilhaft, wenn im zweiten Betriebszustand eine freie Verdrehung der Fangmutter relativ zur Tragmutter nur in einer Richtung möglich ist, während in der anderen Richtung eine. Mitnahmeverbindung vorgesehen ist, damit die vom Gewindetrieb beförderte Last noch in eine sichere Lage befördert werden kann. Dieser Effekt kann durch eine Ausgestaltung des Gewindetriebs gemäß DE-GM 19 41 814, deren Offenbarung hiermit in vollem Umfang in Bezug genommen wird, erreicht werden. Die sichere Lage kann hierbei sowohl eine vollständig angehobene als auch eine vollständig abgesenkte Stellung einer äußeren Last sein. Bei dieser Ausführungsform kann durch die erfindungsgemäße Feder eine zuverlässigere Funktion gegenüber der Ausführungsform gemäß DE-GM 19 41 814 erreicht werden. Für die sichere Funktion ist entscheidend, dass zwischen Fangmutter und Gewindetrieb ein größerer Verdrehwiderstand vorhanden ist als zwischen Fangmutter und Tragmutter in der frei drehbeweglichen Richtung. Durch die Feder kann aber der zületzt genannte Verdrenwiderstand gezielt herabgesetzt werden, .weil die entsprechenden Reibflächen durch die Federkraft entlastet werden. Vorzugsweise wird zwischen der Feder und der Tragmutter bzw. der Fangmutter noch ein Axialkugellager angeordnet, um die Reibung zwischen der Feder und der Tragmutter bzw. der Fangmutter zu minimieren.

Die Fangmutter kann axialbeweglich retativ zur Tragmutter ausgebildet sein, damit das Versagen der Tragmutter bereits durch eine kleine ruckartige Bewegung der Last von einem Außenstehenden erkannt werden kann. Die Richtung der Axialbeweglichkeit muss daher so gewählt werden, dass sich die Tragmutter in Richtung der Schwerkraft auf die Fangmutter zu bewegen kann. Durch die axiale Beweglichkeit vereinfacht sich auch der Einbau der Feder, da keine zusätzlichen Anschläge vorgesehen werden müssen, die den Kompressionsweg der Feder beim Eingreifen der Fangmutter begrertzen. Die Feder, die vorzugsweise als Tellerfeder oder Tollerfederpaket ausgeführt ist, kann vielmehr einfach auf Block zusammengedrückt werden.

Der Axialweg der Fangmutter kann durch eine Schaltvorrichtung erfasst werden. Die Schaltvorrichtung wird vorzugsweise als induktiver Nährungsschalter ausgeführt, der an der Tragmutter befestigt ist. Das Signal der Schaltvorrichtung kann an die Steuerung einer übergeordneten Anlage oder Maschine weitergeleitet werden, die wiederum eine entsprechende Notfallprozedur einleitet.

Abschließend ist noch darauf hinzuweisen, dass der Schraubeingriff zwischen Fangmutter und Gewindespindel vorteilhafterweise selbsthemmend ist, damit eine äußere Last im zweiten Betriebszustand nicht bereits durch Ihr Eigengewicht die Fangmutter in Drehung versetzen kann. Die Last würde sich sonst selbstständig nach unten bewegen.

Die Erfindung wird im Folgenden anhand der beigefügten Zeichnung beschrieben werden. Es stellt dar:

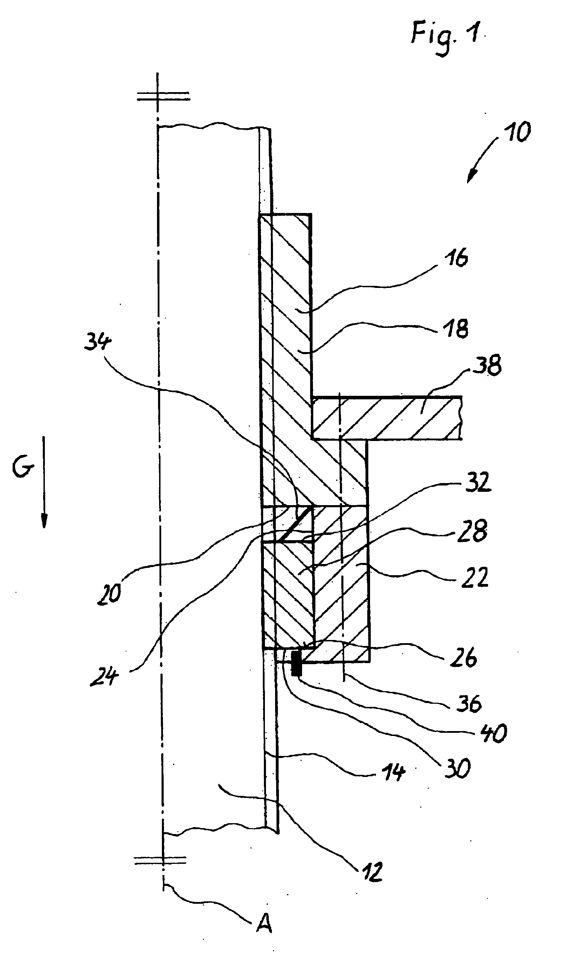

- Fig. 1: eine schematische Schnittansicht eines erfindungsgemäßen Gewindetriebs.

in Fig. 1 ist ein erfindungsgemäßer Gewindetrieb allgemein mit 10 und dessen Achse mit A bezeichnet. Der Gewindetrieb besteht aus einer Gewindespindel 12 mit vereinfacht dargestellten Gewindegängen 14. Weiter umfasst der Gewindetrieb 10 eine Tragmutter 16 und eine Fangmutter 28, die mit der Gewindespindel 12 in Schraubeingriff stehen. Die Tragmutter 16 besteht aus einem Hauptkörper 18, der als Kugelumlaufmutter ausgeführt ist, und einem Befestlgungskörper 22. Die Innenumfangsfläche 24 des Befestigungskörpers 22 ist kreiszylindrisch und dient zur Führung der Fangmutter 26 in axialer Richtung. Der Befestigungskörper 22 ist mit vereinfacht dargestellten Schraubbolzen 36 am Hauptkörper 18 befestigt, der wiederum an einer übergeordneten Baugruppe 38 befestigt ist. Die übergeordnete Baugruppe stellt eine äußere Last dar, die der Gewindetrieb entgegen der Richtung der Schwerkraft G tragen bzw. anheben oder absenken soll.

Weiter ist an dem Befestigungskörper 22 eine Anlagefläche 26 vorgesehen, die sich quer zur Achse A erstreckt. Im ersten Betriebszustand des Gewindetriebs, in dem die Tragmutter 16 ordnungsgemäß arbeitet, liegt die Fangmutter 28 mit einer ersten Stirnfläche 30 an der Anlagefläche 26 an, wobei sie von einem vereinfacht dargestellten Tellerfederpaket 34 gegen die Anlagefläche 26 gedrängt wird. Das Tellerfederpaket ist zwischen einer Stirnfläche 20 des Hauptkörpers 18 und einer zweiten Stirnfläche 32 der Fangmutter unter Vorspannung eingebaut.

Der maximale Hubweg des Tellierfederpakets 34 ist gerade so groß, dass ein induktiver Näherungsschalter 40, der am Befestigungskörper 22 angebracht und auf die erste Stirnfläche 30 der Fangmutter 28 gerichtet ist, beim Übergang vom ersten Betriebszustand in den zweiten Betriebszustand sicher anspricht. Im zweiten Betriebszustand hat die Tragmutter aufgrund eines technischen Defektes oder wegen Überlast versagt, so dass sie die Gewichtskraft der äußeren Last nicht mehr auf die Gewindespindel 12 übertragen kann. Dies wird nunmehr dazu führen, dass die Gewichtskraft von dem Hauptkörper 18 der Tragmutter 16 über das Tellerfederpaket 34 und die Fangmutter 28 in die Gewindespindel 12 eingeleitet wird. Das Tellerfederpaket 34 wird hierbei auf Block zusammengedrückt, wodurch sich: die Fangmutter 28 axial relativ zur Tragmutter 16 verschiebt, was wiederum von dem induktiven Näherungsschalter 40 erkannt werden wird.

An der ersten Stirnfläche 30 der Fangmutter 28 sind zwei nicht dargestellte axiale Bohrungen angebracht, die zum Ansetzen eines Stirnlochschlüssels dienen. Damit kann die Fangmutter 28 relativ zur Gewindespindel 12 so ausgerichtet werden das sie diese nicht berührt. Hierbei muss mit dem Stirnlochschlüssel das Reibmoment überwunden werden, das zwischen der ersten Stirnfläche 30 der Fangmutter 28 und der Anlagefläche 26 der Tragmutter 16 erzeugt wird. Hierbei ist zu beachten, dass die Gewindegänge der Fangmutter äquidistant zu den Gewindegängen 14 der Gewindespindel 12 ausgebildet sind, wobei der Abstand etwa 0,3 mm beträgt. Die Steigung des Gewindetriebs ist so klein gewählt, dass im zweiten Betriebszustand Selbsthemmung zwischen Gewindespindel 12 und Fangmutter 28 gegeben ist.

### Bezugszelchenliste

- A: Achse
- G: Richtung der Schwerkraft
- 10: Gewindetrieb
- 12: Gewindespindel
- 14: Gewindegänge
- 16: Tragmutter
- 18: Hauptkörper
- 20: Stirnfläche des Hauptkörpers
- 22: Befestigungskörper
- 24: Innenumfangsfläche des Befestigungskörpers
- 26: Anlagefläche
- 28: Fangmutter
- 30: erste Stirnfläche der Fangmutter
- 32: zweite Stirnfläche der Fangmutter
- 34: Tellerfederpaket
- 36: Schraubbolzen
- 38: übergeordnete Baugruppe
- 40: induktiver Nänerungsschatter

## Patentansprüche

1. Gewindetrieb (10) mit einer Achse (A) bestehend aus einer Tragmutter (16) und einer Fangmutter (28) die mit einer Gewindespindel (12) in Schraubeingriff stehen, wobei der Kraftfluss in einem ersten Betriebszustand über die Tragmutter (16) und in einem zweiten Betriebszustand über die Fangmutter (28) erfolgen kann, wobei die Fangmutter (28) in einer ersten Stellung relativ zur Tragmutter (16) festiegbar ist, in der sie an einer Anlagefläche (26) der Tragmutter in Achsrichtung abgestützt ist, wobei sie die Gewindegänge (14) der Gewindespindel (12) nicht berührt, wobei
die Fangmutter (28) von einer Feder (34) gegen die Anlagefläche (26) gedrängt wird.

2. Gewindetrieb nach Anspruch 1,
**dadurch gekennzeichnet, dass** die Fangmutter (28) frei verdrehbar zur Tragmutter (16) ausgebildet ist.

3. Gewindetrieb nach Anspruch 2,
**dadurch gekennzeichnet, dass** die Fangmutter (2B) in der ersten Stellung mittels Reibschluss an der Anlagefläche (26) gegen Verdrehen relativ zur Tragmutter (16) gesichert ist.

4. Gewindetrieb nach Anspruch 3.
**dadurch gekennzeichnet, dass** der Verdrehwiderstand im ersten Betriebszustand, in dem sich die Fangmutter (28) in der ersten Stellung befindet, größer ist als im zweiten Betriebszustand.

5. Gewindetrieb nach einem der Ansprüche 2 bis 4,
**dadurch gekennzeichnet, dass** im zweiten Betriebszustand eine freie Verdrehung der Fangmutter (28) relativ zur Tragmutter (16) nur in einer Richtung möglich ist, während in der anderen Richtung eine Mitnahmeverbindung vorgesehen ist.

6. Gewindetrieb nach einem der vorherigen Ansprüche,
**dadurch gekennzeichnet, dass** die Fangmutter (28) eine Axialbewegung relativ zur Tragmutter (16) ausführen kann.

7. Gewindetrieb nach Anspruch 6,
**dadurch gekennzeichnet, dass** eine Schaltvorrichtung (40) vorzugsweise ein induktiver Näherungsschalter vorgesehen ist, der die Axialbewegung der Fangmutter (28) erfasst.

8. Gewindetrieb nach einem der vorherigen Ansprüche,
**dadurch gekennzeichnet, dass** die Tragmutter (16) eine Wälzkörperumlaufmutter ist.

9. Gewindetrieb nach einem der vorherigen Ansprüche,
**dadurch gekennzeichnet, dass** die Feder (34) eine Tellerfeder oder ein Tellerfederpaket ist.

10. Gewindetrieb nach einem der vorherigen Ansprüche,
**dadurch gekennzeichnet, dass** der Schraubeingriff zwischen Fangmutter (28) und Gewindespindel (12) selbsthemmend ist.

## Claims

1. Screw drive (10) having an axle (A), comprising a loadbearing nut (16) and a catch nut (28) which are in screwed engagement with a threaded spindle (12), it being possible for the force flux to take place via the loadbearing nut (16) in a first operating state and via the catch nut (28) in a second operating state, it being possible for the catch nut (28) to be fixed relative to the loadbearing nut (16) in a first position, in which it is supported in the axial direction on a bearing face (26) of the loadbearing nut, the said catch nut (28) not touching the threads (14) of the threaded spindle (12), the catch nut (28) being pushed against the bearing face (26) by a spring (34).

2. Screw drive according to Claim 1, **characterized in that** the catch nut (28) is configured such that it can rotate freely with respect to the loadbearing nut (16).

3. Screw drive according to Claim 2, **characterized in that**, in the first position, the catch nut (28) is secured against rotation relative to the loadbearing nut (16) by means of a frictional connection on the bearing face (26).

4. Screw drive according to Claim 3, **characterized in that** the resistance to rotation is greater in the first operating state, in which the catch nut (28) is situated in the first position, than in the second operating state.

5. Screw drive according to one of Claims 2 to 4, **characterized in that**, in the second operating state, free rotation of the catch nut (28) relative to the loadbearing nut (16) is possible only in one direction, while a driving connection is provided in the other direction.

6. Screw drive according to one of the preceding claims, **characterized in that** the catch nut (28) can perform an axial movement relative to the loadbearing nut (16).

7. Screw drive according to Claim 6, **characterized in that** a switching apparatus (40), preferably an inductive approach switch, is provided which senses the axial movement of the catch nut (28).

8. Screw drive according to one of the preceding claims, **characterized in that** the loadbearing nut (16) is a rolling-body circulation nut.

9. Screw drive according to one of the preceding claims, **characterized in that** the spring (34) is a disc spring or a disc-spring assembly.

10. Screw drive according to one of the preceding claims, **characterized in that** the screw engagement between the catch nut (28) and the threaded spindle (12) is self-locking.

## Revendications

1. Transmission à vis (10) d'axe (A), comprenant :
un écrou de support (18) et un écrou d'accrochage (28) en prise avec une broche filetée (12),
le flux de la force dans un premier état de fonctionnement passant par l'écrou de support (16) et dans un second état de fonctionnement par l'écrou d'accrochage (28),
l'écrou d'accrochage (28) pouvant être fixé par rapport à l'écrou de support (15) dans une première position, dans laquelle il est appliqué contre une surface d'appui (28) de l'écrou de support dans la direction axiale, position dans laquelle l'écrou d'accrochage ne touche pas les filets (14) de la broche filetée (12),
l'écrou d'accrochage (28) étant poussé par un ressort (34) contre la surface d'appui (26).

2. Transmission à vis selon la revendication 1,
**caractérisée en ce que**
l'écrou d'accrochage (28) est libre en rotation par rapport à l'écrou de support (16).

3. Transmission à vis selon la revendication 2,
**caractérisée en ce que**
dans la première position, l'écrou d'accrochage (28) est fixé en rotation par rapport à l'écrou de support (16) par une liaison par friction contre la surface d'appui (26).

4. Transmission à vis selon la revendication 3,
**caractérisée en ce que**
dans le premier état de fonctionnement dans lequel l'écrou d'accrochage (28) occupe sa première position, la résistance en rotation est supérieure à celle du second état de fonctionnement.

5. Transmission à vis selon l'une des revendications 2 à 4,
**caractérisée en ce que**
dans le second état de fonctionnement, la rotation libre de l'écrou d'accrochage (28) par rapport à l'écrou de support (16) est seulement possible dans une direction alors que dans l'autre direction, il y a une liaison d'entraînement.

6. Transmission à vis selon l'une des revendications précédentes,
**caractérisée en ce que**
l'écrou d'accrochage (28) peut effectuer un mouvement axial par rapport à l'écrou de support (16).

7. Transmission à vis selon la revendication 6,
**caractérisée par**
un dispositif de commutation (40), de préférence un commutateur inductif de proximité qui saisit le mouvement axial de l'écrou d'accrochage (28).

8. Transmission à vis selon l'une des revendications précédentes,
**caractérisée en ce que**
l'écrou de support (16) est un écrou tournant sur des organes de roulement.

9. Transmission à vis selon l'une des revendications précédentes,
**caractérisée en ce que**
le ressort (34) est un ressort Belleville ou un paquet de ressorts Belleville.

10. Transmission à vis selon l'une quelconque des revendications précédentes,
**caractérisée en ce que**
l'engrènement entre l'écrou de prise (28) et la broche filetée (12) est un engrènement autobloquant.
